# NEUE EUROPÄISCHE PATENTSCHRIFT

(11) **EP 2 852 634 B2**
(45) Veröffentlichungstag und Bekanntmachung des Hinweises auf die Entscheidung über den Einspruch: **15.05.2024**
(45) Hinweis auf die Patenterteilung: 10.08.2016
(21) Anmeldenummer: 13721301.3
(22) Anmeldetag: 25.04.2013
(51) Int. Cl.: C08K 3/00

(54) **NICHT-WÄSSRIGE ANTIDRÖHNMASSE MIT LÖSEMITTELFREIEM POLYACRYLATBINDEMITTEL**
NON-AQUEOUS SOUND-ABSORBING COMPOUND WITH A SOLVENT-FREE POLYACRYLATE BINDER
MATIÈRE D'INSONORISATION NON AQUEUSE COMPRENANT UN LIANT POLYACRYLATE SANS SOLVANT

(30) Priorität: 22.05.2012 US 201261649956 P; 22.05.2012 EP 12168883
(43) Veröffentlichungstag der Anmeldung: 01.04.2015
(73) Patentinhaber: BASF SE, 67056 Ludwigshafen am Rhein (DE)
(72) Erfinder: WULFF, Dirk, 67105 Schifferstadt (DE); LICHT, Ulrike, 68309 Mannheim (DE); PREISHUBER-PFLüGL, Peter, 68163 Mannheim (DE); WEISS, Axel, 67346 Speyer (DE)
(74) Vertreter: BASF IP Association
(86) Internationale Anmeldenummer: PCT/EP2013/058660
(87) Internationale Veröffentlichungsnummer: WO 2013/174611

(56) Entgegenhaltungen:
- EP-A1- 1 413 603
- WO-A1-2013/174611
- DE-A1- 4 011 914
- DE-A1-102005 021 017
- DE-A1-102005 023 319
- DE-A1-102009 046 739
- JP-A- 2001 247 744
- US-A- 5 120 795
- US-A1- 2004 033 354
- US-A1- 2004 087 721
- Excerpt;Product Information regarding Acronal 3500
- Excerpt;Data sheet of Silquest A-1100
- Data sheet of KBE-903

## Beschreibung

Die Erfindung betrifft die Verwendung einer nicht-wässrigen Antidröhnmasse, enthaltend (a) ein bestimmtes nicht-pulverförmiges, lösemittelfreies Polyacrylatbindemittel mit einem K-Wert im Bereich von 10 bis 35, gemessen als 1%ige Lösung in Tetrahydrofuran; und (b) anorganische Füllstoffe zur Dämpfung von Vibrationen und Schwingungen von Bauteilen von Fahrzeugen oder Maschinen. Die Erfindung betrifft auch ein Verfahren zur Dämpfung von Vibrationen oder Schwingungen von Bauteilen von Fahrzeugen und Maschinen. Die Polyacrylatbindemittel können als Rohstoff zur Herstellung von Beschichtungsmassen für z.B. den Automobilbau verwendet werden, die zur Schall- und Schwingungsdämpfung geeignet sind.

Oszillierende Fahrzeugteile wie z.B. Motor, Reifen oder Getriebe induzieren Schwingungen der Karosserie, welche zu unangenehmen Dröhngeräuschen innerhalb der Fahrgastzelle führen können. Aus diesem Grund werden Schwingungsdämpfungssysteme gezielt auf betroffene Karosserieflächen aufgetragen. Diese sollen die entstehenden Karosserieschwingungen dämpfen. Als Dämpfungssystem kommen in Europa vornehmlich Bitumenmatten zum Einsatz, welche in einem personalintensiven Arbeitsschritt per Hand in die Karosserie eingelegt und verklebt werden müssen. Seit wenigen Jahren werden alter nativ pump- und spritzbare Massen, sogenannte LASD-Massen (liquid applied sound damping), eingesetzt, die per Sprühroboter präzise und schnell appliziert werden können. Im Vergleich zu Bitumenmatten ermöglicht diese Technologie dem Fahrzeughersteller eine Gewichtsersparnis aufgrund höherer Dämpfungseffizenz sprühbarer Systeme. Zudem ist eine Reduzierung von Personal-, Logistik- und Lagerkosten möglich und sorgt für eine Reduzierung von Platzbedarf und Staubbelastung an der Produktionslinie.

Derartige LASD Massen enthalten neben Füllstoffen, die sowohl zur Kostenreduzierung als auch zur Verbesserung der Dämpfung dienen, polymere Anteile. Je nach vorliegender Form kann man diese in wässrige und nicht-wässrige LASD-Systeme unterscheiden. Der polymere Anteil wässriger LASD Massen basiert vorwiegend auf Polyacrylatdispersionen. Das Polyacrylat erfüllt zum einen die Aufgabe des Bindemittels und sorgt zudem für die gewünschten Dämpfungseigenschaften durch Copolymerisation, z.B. mit Styrol oder Vinylacetat oder durch Mischung mit anderen Polymeren wie z.B. Polyurethan, PVC-Plastisol, Silikonen oder Epoxidpolymeren. Dadurch können gewünschte anwendungstechnische Eigenschaften wie z.B. Dämpfungsverhalten oder Wasseraufnahme eingestellt werden. Darüber hinaus ermöglichen Dispersionen eine niedrige Viskosität bei hohen Feststoffgehalten und strukturviskoses Verhalten der LASD-Massen. Dadurch wird bei hohen Scherraten eine Sprühapplikation ermöglicht, im Ruhezustand behält die Masse Formstabilität ohne zu fließen.

Der polymere Anteil nichtwässriger LASD Massen beruht vielfach auf Kautschuken, Epoxidharzen, PVC-Plastisolen, Polyurethanen oder Acrylatpulvern. Die darauf basierenden Massen werden durch das Aufschmelzen der Polymere fließfähig und durch anschließendes Versprühen auf das Substrat appliziert. Massen, die bei Raumtemperatur aufgetragen werden können, enthalten oftmals Weichmacher oder niederviskose Bindemittel, um die Verarbeitung zuzulassen. oxide oder Reaktion zu Polyurethanen um eine ausreichende Formstabilität zu erhalten. Nichtwässrige LASD Massen haben den Vorteil, dass sie in den Trockenstufen der Lackiererei zumeist schneller verfestigen und nicht wie im Falle der wässrigen LASD Massen Wasserdampf erzeugen, was zu einer unerwünschten Riss- und Blasenbildung führen kann. Zudem weisen nichtwässrige LASD Massen eine gute Stabilität gegen Feuchtigkeit und eine hohe Abriebfestigkeit auf. Nachteilig, z.B. bei Epoxidharzen kann ein starker Schrumpf sein, der zu einer Verzeichnung im Fahrzeugblech führen kann. PVC-Plastisole haben den Nachteil, dass sie chlorhaltig sind, was häufig unerwünscht ist.

Systeme auf Basis von Polyacrylatpulvern bzw. Polyacrylat-Plastisolen haben den Nachteil, dass hiertür in der Regel Kern-Schale-Harze in Kombination mit relativ hohen Mengen an Weichmachern eingesetzt werden, was diese Systeme relativ teuer macht. Die benötigte Schale der Polymerpartikel hat außerdem in der Regel eine relativ hohe Glasübergangstemperatur, was dazu führen kann, dass die Dämpfungswirksamkeit der Dämpfungsmasse bei höheren Temperaturen begrenzt ist. Außerdem werden die Acrylatpulver in der Regel hergestellt durch Emulsionspolymerisation mit anschließender Sprühtrocknung, wobei die bei der Emulsionspolymerisation verwendeten Emulgatoren in den Polymerpulvern verbleiben und nach der Applizierung an die Oberfläche migrieren können und die Haftung der Dämpfungsmasse am Metall beeinträchtigen können. Acrylat-Plastisole enthalten außerdem eine hoha Menge an Weichmacher bezogen auf die Festmasse, wobei die Weichmacher nicht zur Dämpfungswirkung beitragen. Dies hat eine relativ geringe Dämpfungswirkung pro Masseneinheit zur Folge.

Auf Acrylatdispersionen basierende, wässrige LASD Massen zeichnen sich durch gute Dämpfungseigenschaften aus. Wässrige Systeme sind z.B. beschrieben in EP 1935941. Schwingungsdämpfende Zusammensetzungen auf Basis von wasserbasierten Polymerdispersionen und anorganischen Füllstoffen sowie weiterer Hilfsstoffe sind bekannt aus der EP 1520865, WO 2007/034933, WO 01/90264, DE 10 2006 052 282, EP 2420412 und US2012/027941. EP 1413603 A1 beschreibt schwingungsdämpfende Materialien. Als schwingungsdämpfender Wirkstoff wird ein bestimmtes Polyvinylphenolharz eingesetzt. Die Materialien enthalten eine polymere Matrix, bei der es sich um Acrylatpolymere handeln kann und die Materialien können anorganische oder organische Füllstoffe enthalten. US 2004/0033354 beschreibt selbstklebende, schwingungsdämpfende Klebebänder mit einer Zusammensetzung enthaltend synthetischen Kautschuk, ein thermoplastisches Polymer, Weichmacher und organischen Füllstoff. JP 2001-247744 beschreibt emulsionsförmige, schwingungsdämpfende Zusammensetzungen enthaltend ein filmbildendes Harz mit niedriger Glasübergangstemperatur (z.B. ein Acrylharz), anorganischen Füllstoff und ein Petroleumharz.

Eine Verbesserung der Dämpfungseffizienz gibt den Automobilherstellern die Möglichkeit, im Vergleich zu Bitumenmatten und nichtwässrigen LASD-Massen, eine Gewichtsersparnis zu realisieren. Daneben haben Dispersionen aufgrund ihrer guten toxikologischen Eigenschaften keine gesundheitsrelevante Bedeutung und können ohne zusätzliche Schutzeinrichtung verarbeitet werden. Nachteilig zeigt sich bei applizierten und getrockneten Massen jedoch eine hohe Wasseraufnahme, die zu einer Veränderung der Eigenschaften führen kann und die Stabilität und Langlebigkeit der applizierten und getrockneten LASD Massen gefährdet. Ausgelöst wird dieser Hang zur Wasseraufnahme sowohl durch Kapillarkräfte der porösen Masse, als auch durch hydrophile Hilfsstoffe wie Emulgatoren, Dispergierhilfsmittel oder Stabilisatoren. Dämpfungssysteme werden nicht nur im Innenraum des Fahrzeugs eingesetzt, sondern auch im Außenbereich, wie Radkästen, Motorraum oder Klimabox. Diese Bereiche sind hoher Feuchtigkeit ausgesetzt. Die dort eingesetzten Schwingungsdämpfungssysteme benötigen somit eine hohe Resistenz gegen die Wasseraufnahme. Folglich sind diese Bereiche wasserbasierenden LASD Massen bisher nicht zugänglich,
Bitumenmassen haben zwar eine sehr geringe Wasseraufnahme, aber auch eine relativ schlechte Dämpfungswirkung bezogen auf das Auftragsgewicht. Bekannt sind auch wasserfreie, spritzbare Systeme auf Basis von Kautschukmassen. Diese Massen müssen aber mit Schwefel vulkanisiert werden, was zu Geruchsproblemen führen kann.

Neben der Wasseraufnahme stellt die Blasenbildung während der Trocknung für Formulierer von LASD Massen eine große Herausforderung dar. In den Trocknungskanälen der Lackiererei verdampft das Wasser der Masse. Liegt in der trocknenden Masse eine Wasserdampfbarriere vor, so kann daraus eine Riss- und Blasenbildung resultieren. Dabei kommt es vor, das sich Massen von der Karosserie abheben können und durch mangelnden Kontakt mit der Oberfläche keine ausreichende Schwingungsdämpfung erreichen. Außerdem zeigt sich eine solche Blasenbildung als schwerwiegender Fabrikationsfehler, da sich dadurch die Dimensionen der Schalldämmmassen ändern und somit kein gleichmäßiger Prozess möglich ist.

Es bestand die Aufgabe, Antidröhnmassen zur Verfügung zu stellen, welche eine oder mehrere der vorstehend genannten Nachteile vermindem, insbesondere die Wasseraufnahme von applizierten LASD-Massen sowie das Problem der Blasen- und Rissbildung im Trocknungskanal zu minimieren oder zu umgehen. Außerdem sollte eine möglichst hohe Dämpfung, bezogen auf Auftraggewicht und Feststoffgehalt der LASD-Massen erreicht werden.

Es wurde gefunden, dass die Aufgabe gelöst wird durch die Verwendung einer nicht-wässrigen Antidröhnmasse, enthaltend
(a) mindestens ein nicht-pulverförmiges, lösemittelfreies Polyacrylatbindemittel mit einem K-Wert im Bereich von 10 bis 35, gemessen als 1%ige Lösung in Tetrahydrofuran bei 21 °C, wobei das Polyacrylatbindemittel durch Polymerisation von radikalisch polymerisierbaren Monomeren erhältlich ist und zu mindestens 60 Gew. % aus C₁ bis C₁₀ Alkyl(meth)-acrylaten gebildet ist; und
(b) anorganische Füllstoffe, zur Dämpfung von Vibrationen und Schwingungen von Bauteilen von Fahrzeugen oder Maschinen, wobei das Polyacrylatbindemittel eine Glasübergangstemperatur im Bereich von -30 °C bis kleiner oder gleich +60 °C aufweist, gemessen als Mittelpunktstemperatur durch Differential Scanning Calorimetrie gemäß ASTM 3418-08.

Eine bevorzugte Verwendung der Antidröhnmasse ist die Verwendung zur Schwingungsdämpfung von Karosserieteilen eines Fahrzeugs.

Der Begriff "nicht-wässrig" bedeutet insbesondere, dass keine wässrigen Polymerdispersionen zur Herstellung der Antidröhnmassen eingesetzt werden.

Der Begriff "lösemittelfrei" bezieht sich auf sogenannte "100%-Systeme", bei denen das polymere Bindemittel in Substanz, das heißt nicht in einem organischen Lösungsmittel gelöst eingesetzt wird. Herstellungsbedingte Lösemittelreste von z.B. unter 5 Gew.%, bezogen auf das polymere Bindemittel, sind dabei unschädlich, da die Abluft der Trockenöfen einer Nachverbrennung zugeführt werden kann.

Polyacrylatbindemittel sind Bindemittel auf Basis von Polymeren, die überwiegend, d.h. zu mehr als 50 Gew.% aus (Meth)acrylsäureestern aufgebaut sind. Der Ausdruck (Meth)acryl... ist eine abkürzende Schreibweise für "acryl- oder Methacryl-".

Bei den erfindungsgemäß einzusetzenden Polyacrylatbindemitteln handelt es sich um Polymere mit vergleichsweise niedrigen, begrenzten Molekulargewichten, welche zumindest bei leichter Erwärmung fluide sind und eine ausreichend niedrige Viskosität aufweisen, um gut auf die zu beschichtenden Substrate aufgetragen werden zu können. Eine Maß für die Molekulargewichte ist der K-Wert (Fikentscher-Konstante). Der auch als Eigenviskosität bezeichnete K-Wert ist ein über Viskositätsmessungen von Polymerlösungen einfach zu bestimmender Wert und ist unter standardisierten Messbedingungen alleine abhängig von der mittleren Molmasse der untersuchten Probe. Die K-Werte der Polyacrylatbindemittel liegen im Bereich von 10 bis 35, vorzugsweise 10 bis 25, gemessen als 1%ige Lösung in Tetrahydrofuran bei 21 °C.

Die Glasübergangstemperatur (Tg) des Polyacrylatbindemittels beträgt - -30 bis +60 °C. Die Glasübergangstemperatur lässt sich nach üblichen Methoden wie Differential Scanning Calorimetrie (ASTM 3418-08, sog. "midpoint temperature") bestimmen. Art und Menge der Monomeren sind derart, dass die Glasübergangstemperatur des Polyacrylatbindemittels in dem genannten Bereich liegt.

Die Nullviskosität das Polyacrylatbindemittels beträgt bei 130°C vorzugsweise maximal 40 Pa s, vorzugsweise maximal 10 Pa s, z.B. 1 bis 40 oder 1 bis 10 Pa s.

Polyacrylatbindemittel sind erhältlich durch Polymerisation von radikalisch polymerisierbaren Acrylatmonomeren, worunter auch Methacrylatmonomere verstanden werden, und optional weiteren, copolymerisierbaren Monomeren. Die Polymere sind gebildet zu mindestens 60 Gew. %, ganz besonders bevorzugt zu mindestens 80 Gew.-% aus C₁ bis C₁₀ Alkyl(meth)acrylaten und optional aus weiteren Monomeren. Genannt seien insbesondere C1-C8 Alkyl(meth)acrylate, z.B. Methyl(meth)acrylat, Ethyl(meth)acrylat, n-Butyl(meth)acrylat und 2-Ethylhexyl (meth)acrylat.

Weitere, von Acrylaten verschiedene Monomere, aus denen das Polyacrylatbindemittel zusätzlich aufgebaut sein kann, sind z.B. Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden AlKoholen, aliphatischen Kohlenwasserstoffe mit 2 bis 8 C-Atomen und 1 oder 2 Doppelbindungen oder Mischungen dieser Monomeren. Als vinylaromatische Verbindungen kommen z.B. Vinyltoluol alpha- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinyl-ether zu nennen sind z. B. Vinylmethylether oder Vinylisobutylether. Bevorzugt sind Vinylether von 1 bis 4 C-Atome enthaltenden Alkoholen. Als Kohlenwasserstoffe mit 2 bis 8 C-Atomen und zwei olefinischen Doppelbindungen seien Butadien, Isopren und Chloropren genannt. Als weitere Monomere in Betracht kommen insbesondere auch ethylenisch ungesättigte, radikalisch polymerisierbare Säuremonomere, beispielsweise Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch (Meth)acrylamid und Hydroxylgruppen enthaltende Monomere, insbesondere C1-C10-Hydroxyalkyl(meth)acrylate. Darüber hinaus seien Phenyloxyethylglykolmono-(meth)acrylat, Glycidylacrylat, Glycidylmethacrylat, Amino-(meth)acrylate wie 2-Aminoethyl(meth)acrylat genannt. Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern.

Die weiteren Monomere sind vorzugsweise ausgewählt aus ethylenisch ungesättigten, radikalisch polymerisierbaren Säuremonomeren, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

Die Polyacrylatbindemittel können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die Polyacrylatbindemittel durch Polymerisation der Monomeren in organischen Lösungsmitteln, insbesondere in organischen Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt.

Die Copolymerisate können bei Temperaturen von 20 bis 150 °C, vorzugsweise bei Temperaturen im Bereich von 70 bis 120 °C und Drucken von 0,1 bis 100 bar (absolut), bevorzugt bei 0,3 bis 10 bar, in Gegenwart von 0,01 bis 10 Gew.-% an Peroxiden oder Azostartern als Polymerisationsinitiatoren, bezogen auf die Monomeren und in Gegenwart von 0 bis 200 Gew.-% an indifferenten Lösungsmitteln, bevorzugt 5 bis 25 Gew.-%, bezogen auf die Monomeren, d.h. durch Lösungs- oder Substanzpolymerisation hergestellt werden. Vorzugsweise erfolgt die Reaktion unter zunehmendem Vakuum, z.B. durch Absenkung des Drucks von Normaldruck (1 bar) auf 500 mbar (absolut). Lösungsmittel sind beispielsweise Kohlenwasserstoffe wie Toluol oder o-Xylol, Alkohole wie Methanol, Ethanol, Propanol, Butanol, Isobutanol, Ketone wie Aceton, Methylethylketon, Methylisobutylketon, Essigsäureethylester, Nitrile wie Acetonitril und Benzonitril oder Gemische aus den genannten Lösemitteln.

Als Polymerisationsinitiatoren kommen beispielsweise Azoverbindungen, Ketonperoxide und Alkylperoxide in Betracht, z.B. Acylperoxide wie Benzoylperoxid, Dilauroylperoxid, Didecanoylperoxid, Isononanoylperoxid, Alkylester wie tert.-Butyl-perpivalat, tert.-Butyl-per-2-ethylhexanoat, tert.-Butyl-per-maleinat, tert.-Butyl-per-isononanoat, tert.-Butyl-per-benzoat, tert.-Amylper-2-ethylhexanoat, Dialkylperoxide wie Dicumylperoxid, tert.-Butylcumylperoxid, Di-tert.-Butylperoxid und Peroxodicarbonate. Des Weiteren können als Initiatoren Azostarter wie beispielsweise 2,2'-Azobisisobutyronitril, 2,2'-Azobis(methylisobutyrat) oder 2,2'-Azobis(2,4-dimethylvaleronitril) Verwendung finden.

Für die Durchführung der Polymerisation können dem Reaktionsgemisch auch den Polymerisationsgrad senkende Verbindungen, sogenannte Polymerisationsregler zugesetzt werden, z.B. in Mengen von 0,1 bis 0,8 Gew.-Teile, bezogen auf 100 Gew.-Teile der zu polymerisierenden Monomeren. Geeignet sind z.B. Verbindungen mit einer Thiolgruppe beispielsweise Mercaptane wie Mercaptoethanol, tert.-Butylmercaptan, Mercaptobernsteinsäure, Thioglycolsäureethylhexylester, 3-Mercaptopropyltrimethoxysilan oder Dodecylmercaptan. In einer Ausführungsform werden keine Molekulargewichtsregler eingesetzt.

Das Polyacrylatbindemittel ist vorzugsweise hergestellt
(a1) zu mindestens 80 Gew.% aus C1- bis C10-Alkyl(meth)acrylaten und
(a2) zu 0,5 bis 20 Gew.% aus Monomeren mit polaren Gruppen, wobei die polaren Gruppen ausgewählt sind aus Carbonsäuregruppen, Carbonsäureamidgruppen, Pyrrolidongruppen, Urethangruppen und Harnstoffgruppen.

Ein besonders bevorzugtes Polyacrylatbindemittel ist hergestellt aus Methyl(meth)acrylat (vorzugsweise Methylmethacrylat), mindestens einem C2- bis C4-Alkylacrylat (vorzugsweise n-Butylacrylat) und (Meth)acrylsäure (vorzugsweise Acrylsäure), z.B.
(i) 0 bis 99 Gew.% Methyl(meth)acrylat (vorzugsweise Methylmethacrylat),
(ii) 0 bis 99 Gew.% mindestens eines C2- bis C10-Alkylacrylats (vorzugsweise n-Butylacrylat und
(iii) 0,5 bis 15 Gew.% (Meth)acrylsäure (vorzugsweise Acrylsäure).

Im Unterschied zu bekannten Acrylat-Plastisolen, ist es nicht erforderlich, dass die Acrylatbindemittel Polymerpartikel mit einer Kern-Schale -Morphologie sind, sie weisen deshalb vorzugsweise keine Kern-Schale Morphologie auf.

Die erfindungsgemäße Antidröhnmasse enthält vorzugsweise
(a) 5 bis 35 Gew.%, vorzugsweise 10 bis 20 Gew.% des Polyacrylatbindemittels,
(b) 40 bis 90 Gew.% vorzugsweise 60 bis 80 Gew.% anorganische Füllstoffe und
(c) 0 bis 50 Gew.%, vorzugsweise 0,1 bis 20 Gew.% Hilfsstoffe.

Geeignete anorganische Füllstoffe sind z.B. Calciumcarbonat, Kaolin, Mica, Silica, Kreide, Mikrodolomit, Quarzmehl, Talk, Ton, Bariumsulfat, Tonerde, Eisenoxid, Titandioxid, Glaspulver, Glasschuppen, Magnesiumcarbonat, Aluminiumhydroxid, Bentonit, Flugasche, Kieselguhr, Perlit und Glimmer. Bevorzugt werden schuppenförmige Füllstoffe wie z.B. Mica eingesetzt, allein oder in Kombination mit gewöhnlichen anorganischen Pigmenten wie Calciumcarbonat, Kaolin, Silica oder Talk. Bevorzugte Füllstoffe sind Kaolin, Kreide, Bariumsulfat, Ruß, Graphit, Talkum, Tonmineralien, Mikrodolomit, Quarzmehl und Glimmer.

Vorzugsweise werden 50 bis 700 oder 100 bis 600 Gewichtsteile anorganischer Füllstoff auf 100 Gewichtsteile Polyacrylatbindemittel eingesetzt, wobei vorzugsweise 30 bis 150 oder 40 bis 120 Gewichtsteile schuppenförmige Füllstoffe auf 100 Gewichtsteile Polyacrylatbindemittel eingesetzt werden.

Hilfsstoffe, die vorzugsweise zu mindestens 0,1 Gew.%, z.B. von 0,2 bis 10 Gew.% eingesetzt werden sind z.B. Vernetzer, Verdickungsmitteln, Rheologieadditive, Harze, Weichmacher, organische und anorganische Pigmente, Cosolventien, Stabilisatoren, Benetzungsmittel, Konservierungsstoffe, Schauminhibitoren, Glas- oder Kunststoffperlen, Glas- oder Kunststoffhohlkörper, Gefrierschutzmittel, Dispergiermittel, Antioxidantien, UV-Absorber, Antistatika und Pigmentdispergatoren. Von den Hilfsstoffen können ein, zwei oder mehrere in Kombination eingesetzt werden. Geeignete Cosolventien sind z.B. Ethylenglykol, Ethylenglykolalkylether (z.B. Cellosolve^{®}-Typen), Diethylenglykolalkylether (z.B. Carbitol^{®}-Typen), Carbitolacetat, Butylcarbitolacetat oder deren Mischungen. Verdickungsmittel sind z.B. Polyvinylalkohole, Cellulosederivate oder Polyacrylsäuren in Mengen von z.B. 0,01 bis 4 oder von 0,05 bis 1,5 oder von 0,1 bis 1 Gewichtsteilen, bezogen auf 100 Gewichtsteile Feststoff. Dispergiermittel sind z.B. Natriumhexametaphosphat, Natriumtripolyphosphate, oder Polycarbonsäuren. Gefrierschutzmittel sind z.B. Ethylenglykol oder Propylenglykol. Schauminhibitoren sind z.B. Silikone. Stabilisatoren sind z.B. polyvalente Metallverbindungen wie Zinkoxid, Zinkchlorid oder Zinksulfat. Bevorzugt werden die Hilfsstoffe zu mindestens 0,1 Gew.% eingesetzt und sind ausgewählt aus Vernetzern, Verdickungsmitteln, Rheologieadditiven, Harzen, Weichmachern, Cosolventien, Entschäumern, Konservierungsmitteln, Frostschutzmitteln und Pigmentdispergatoren.

Die erfindungsgemäße Antidröhnmasse ist vorzugsweise lösemittelfrei, d.h. enthält kein oder jedenfalls weniger als 5 Gew.% organische Lösungsmittel mit Siedepunkt kleiner 200 °C.

In einer Ausführungsform der Erfindung enthält die Antidröhnmasse keine hochmolekularen Bindemittel oder keine pulverförmigen Bindemittel, insbesondere keine Bindemittel mit einem K-Wert über 40 oder über 35 oder mit einem nicht mehr messbaren K-Wert. Bei dieser Ausführungsform weist das Polyacrylatbindemittel vorzugsweise Säuregruppen auf und die Antidröhnmasse enthält vorzugsweise mindestens einen mit Säuregruppen reaktiven Vernetzer. Die Säuregruppen können durch Copolymerisation mit einem Säuremonomer, z.B. Acrylsäure oder Methacrylsäure erhalten werden. Der Vernetzer kann ausgewählt sein aus der Gruppe bestehend aus Isocyanatvernetzern, Carbodiimidvernetzern, Epoxyvernetzern, Oxazolinvernetzern und Silanvernetzern, vorzugsweise polymeren oder oligomeren Epoxyvernetzern, insbesondere Epoxy-modifizierte Acrylpoolymere. Ein geeigneter Epoxy-Vernetzer ist z.B. Joncryl^{®} ADR 4380. Bei dieser Ausführungsform erfolgt während oder nach dem Auftragen der Antidröhnmasse auf das Substrat eine Vernetzung, welche vorzugsweise thermisch induziert wird.

In einer anderen Ausführungsform der Erfindung enthält die Antidröhnmasse zusätzlich mindestens ein hochmolekulares oder pulverförmigen Bindemittel, insbesondere ein Bindemittel mit einem K-Wert über 40 oder über 35 oder mit einem nicht mehr messbaren K-Wert. Bei dieser Ausführungsform enthält die Antidröhnmasse vorzugsweise mindestens einen Weichmacher für das zusätzliche Bindemittel.

In einer Ausführungsform der Erfindung weist das Polyacrylatbindemittel einen K-Wert von größer oder gleich 20, vorzugsweise größer oder gleich 25 auf und die Antidröhnmasse enthält mindestens einen Weichmacher.

Als Weichmacher, oft auch als Plastifizierungsmittel bezeichnet, genügt in vielen Fällen die Verwendung eines einzigen Weichmachers, es kann aber auch vorteilhaft sein, ein Gemisch von zwei oder mehreren verschiedenen Weichmachern zu verwenden. Weichmacher sind z.B. Phthalate, wie zum Beispiel das Diisodecylphthalat, Diethylhexylphthalat, Diisononylphtalat, Di-C7-C11-n-alkylphthalat, Dioctylphthalat, Trikresylphosphat, Dibenzyltoluol und Benzyloctylphthalat. Darüber hinaus können auch andere Verbindungen wie Citrate, Phosphate, Adipate, Benzoate und Diisononylcyclohexandicarbonsäureester (DINCH) verwendet werden. Die genannten Weichmacher können auch als Mischungen eingesetzt werden. Die Mengenverhältnisse können in weiten Bereichen variieren. In typischen Zusammensetzungen sind die Weichmacher in Anteilen von 50 bis 300 Gew.-Teilen, auf 100 Gew.-Teile des weichzumachenden Polymerisats enthalten. Zur Anpassung an die rheologischen Anforderungen können zudem Lösungsmittel (wie zum Beispiel Kohlenwasserstoffe) als Verdünner eingesetzt werden.

Es können auch Haftvermittler in Mengen von z.B. 40 - 120 Gew.-Teilen zugesetzt werden, beispielsweise Polyaminoamide, blockierte Isocyanate oder selbstvernetzende blockierte Isocyanate.

Die Güte einer Antidröhnmasse kann durch Messung der Biegeschwingungen im Resonanzkurvenverfahren nach ISO 6721-1 und ISO 6721-3 gemessen werden. Ein Maß für die schwingungsdämpfende Wirkung ist der Verlustfaktor tan delta. Das Maximum des Verlustfaktors tan delta liegt bei erfindungsgemäßen Antidröhnmassen vorzugsweise im Bereich von -20 bis +70°C. Im Falle der Verwendung von zwei oder mehr verschiedenen Bindemitteln gibt es in der Regel zwei oder mehr Maxima des Verlustfaktors bei mindestens zwei verschiedenen Temperaturen. In diesem Fall liegen vorzugsweise alle Maxima des Verlustfaktors im Bereich von -20 bis +70 °C. Im Falle der Verwendung von Vernetzern beziehen sich die Werte auf die vernetzte Antidröhnmasse.

Gegenstand der Erfindung ist auch ein Verfahren zur Dämpfung von Vibrationen oder Schwingungen von Bauteilen von Fahrzeugen oder Maschinen, wobei
(1) eine oben näher beschriebene Antidröhnmasse zur Verfügung gestellt wird, und
(2) die Antidröhnmasse auf ein Bauteil eines Fahrzeuges oder einer Maschine aufgebracht und optional getrocknet und/oder vernetzt wird.

Das Aufbringen kann auf übliche Art erfolgen, z.B. durch Streichen, Rollen oder Sprühen. Die aufgebrachte Menge ist vorzugsweise von 1 bis 7 kg/m² oder von 2 bis 6 kg/m² nach Trocknen. Das Trocknen kann bei Umgebungstemperatur oder vorzugsweise durch Anwendung von Wärme erfolgen. Die Trocknungstemperaturen sind vorzugsweise von 80 bis 210°C oder von 90 bis 180 °C oder von 120 bis 170 °C.

Die Antidröhnmasse kann beispielsweise angewendet werden in Fahrzeugen aller Art, insbesondere Straßenkraftfahrzeugen, Automobilen, Schienenfahrzeugen aber auch in Schiffen, Flugzeugen, elektrischen Maschinen, Baumaschinen und Gebäuden.

Die Antidröhnmassen haben gute anwendungstechnische Eigenschaften hinsichtlich guter Auftragbarkeit und guten schwingungsdämpfenden Eigenschaften und zeichnen sich durch ein geringes Wasseraufnahmevermögen und eine Vermeidung von Blasenbildung auf.

### Beispiele

### Einsatzstoffe

### Joncryl^{®} ADR 4380 Vernetzer, Epoxid-modifiziertes Acrylpolymer Acronal^{®} DS 3502 wässrige Polymerdispersion, Polyacrylsäureester

### Beispiel 1: niedermolekulares Harz, in i-Propanol polymerisiert

In einer Polymerisationsapparatur bestehend aus Glasreaktor, Rückflusskühler, Rührer und Stickstoffeinlass werden in leichtem Stickstoffstrom 1611 g i-Propanol vorgelegt und auf 80 °C erwärmt. Es werden 37,5 g einer Monomermischung bestehend aus 423,75 g n-Butylacrylat, 270 g Methylmethacrylat und 56,25 g Acrylsäure zugegeben. Nach Wiedererreichen von 80°C werden 23 g einer Starterlösung aus 20 g tert.-Butylperpivalat (75%ig in Mineralöl) und 210 g i-Propanol zugegeben und 3 min anpolymerisiert. Dann werden die restlichen 712 g Monomermischung und 207 g Starterlösung in 3 h zugefahren. Anschließend wird die Temperatur auf 90°C erhöht und eine Lösung von 2,4 g tert.-Butylperpivalat (75%ig in Mineralöl) in 37,5 g i-Propanol in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und bestem Vakuum entgast.
K-Wert; 1% in THF bei 21 °C: 16,6
Nullviskosität bei 130°C: 5,5 Pa s

### Beispiel 2: niedermolekulares Harz in o-Xylol polymerisiert

In einer Polymerisationsapparatur bestehend aus Glasreaktor, Rückflusskühler, Rührer und Stickstoffeinlass werden in leichtem Stickstoffstrom 484,1 g o-Xylol vorgelegt und auf 140 °C erwärmt. Es werden bei 120°C 35 g einer Monomermischung bestehend aus 395,5 g n-Butylacrylat, 252 g Methylmethacrylat und 52,5 g Acrylsäure zugegeben. Bei 137°C werden 11,2 g einer Starterlösung aus 28 g tert.-Butylperpivalat (75%ig in Mineralöl) und 196 g o-Xylol zugegeben und 3 min anpolymerisiert. Dann werden die restlichen 665 g Monomermischung und 212,8 g Starterlösung in 3 h zugefahren. 15 min nach Zulaufende wird eine Lösung von 2,24 g tert.-Butylperpivalat (75%ig in Mineralöl) in35 g o-Xylol in 30 min zugegeben. Danach wird Vakuum angelegt und das Lösungsmittel bei maximal 140° C und kleiner 50 mbar abdestilliert. Anschließend wird noch unter langsamem Rühren 1 h bei 140°C und bestem Vakuum entgast.
K-Wert; 1% in THF bei 21 °C: 14,4
Nullviskosität bei 130°C: 2,2 Pa s

### Beispiel 3: hochmolekulares Harz mit Weichmacher, in Methylethylketon (MEK) polymerisiert

In einer Polymerisationsapparatur bestehend aus Glasreaktor, Rückflusskühler, Rührer und Stickstoffeinlass werden in leichtem Stickstoffstrom 813,9 g Methylethylketon (MEK) vorgelegt und auf 80 °C erwärmt. Es werden 60 g einer Monomermischung bestehend aus 678 g n-Butylacrylat, 432 g Methylmethacrylat und 90 g Acrylsäure zugegeben. Nach Wiedererreichen von 80°C werden 17,6 g einer Starterlösung aus 16 g tert.-Butylperpivalat (75%ig in Mineralöl) und 336 g MEK zugegeben und 3 min anpolymerisiert. Dann werden die restlichen 1140 g Monomermischung und 334,4 g Starterlösung in 3 h zugefahren. Anschließend wird die Temperatur auf 90°C erhöht und eine Lösung von 3,48 g tert.-Butylperpivalat (75%ig in Mineralöl) in 60 g MEK in 30 min zugegeben. Es werden 1200 g Hexamoll^{®} DINCH (Weichmacher) zugegeben. Danach wird Vakuum angelegt und das Lösungsmittel bei maximal 135°C und kleiner 50 mbar abdestilliert. Anschließend wird noch unter langsamem Rühren 1 h bei 135°C und bestem Vakuum entgast.
K-Wert; 1 % in THF bei 21 °C: 32,1 vor Zugabe des Weichmachers
Nullviskosität mit Weichmacher bei 60°C: 15,9 Pa s

### Beispiel 4: niedermolekulares Harz in o-Xylol polymerisiert

In einer Polymerisationsapparatur bestehend aus Glasreaktor, Rückflusskühler, Rührer und Stickstoffeinlass werden in leichtem Stickstoffstrom 484,1 g o-Xylol vorgelegt und auf 140 °C erwärmt. Es werden bei 120°C 35 g einer Monomermischung bestehend aus 395,5 g n-Butylacrylat, 252 g Methylmethacrylat und 52,5 g Acrylsäure, zugegeben. Bei 137°C werden 11,2 g einer Starterlösung aus 28 g tert.-Butylperpivalat (75%ig in Mineralöl) und 196 g o-Xylol zugegeben und 3 min anpolymerisiert. Dann werden die restlichen 665 g Monomermischung und 212,8 g Starterlösung in 3 h zugefahren. 15 min nach Zulaufende wird eine Lösung von 2,24 g tert.-Butylperpivalat (75%ig in Mineralöl) in35 g o-Xylol in 30 min zugegeben. Danach wird Vakuum angelegt und das Lösungsmittel bei maximal 140° C und kleiner 50 mbar abdestilliert. Anschließend wird noch unter langsamem Rühren 1 h bei 140°C und bestem Vakuum entgast.
K-Wert; 1 % in THF bei 21 °C: 14
Nullviskosität bei 60°C: 595,9 Pa s

### Beispiel 5: acResin^{®} DS 3500 (Acrylatharz mit Säuregruppen) (nicht anspruchsgemäß)

K-Wert, 1% in THF bei 21 °C: *11 bis 16*
Viskosität bei 20 °*C*: *150 Pa s*

### Beispiel 6: Harz gemäß Beispiel 4, dispergiert in Wasser

100 g einer Mischung des Harzes aus Beispiel 4 und Joncryl^{®} ADR 4380 im Verhältnis 75:25 werden bei 90°C in einem Becherglas mit 99 g destilliertem Wasser sowie 1 g 25 %igem Ammoniakwasser für 3 min mittels eines Scheibendissolvers dispergiert.
F eststoffgehalt: 50%

### Beispiel 7: Dispersion Acronal^{®} DS 3502

Viskosität DIN EN ISO 3219: 2 bis 6 Pa s
Feststoffgehalt: 55%

### Herstellung der Antidröhnmassen A1 und A2:

Zu dem Harz aus den Beispielen 1 bzw. 2 wird bei 90°C Joncryl^{®} ADR 4380 im Verhältnis 85:15 gegeben und in einem Speedmixer für 20 s bei 2750 U/min vermischt. Anschließend werden Bariumsulfat und Kreide (Omyacarb^{®} 20BG) zu gleichen Gewichtsanteilen zu dem Bindemittel (Harz plus Vernetzer) im Verhältnis 85:15 (Füllstoff-Bindemittel) gegeben und weitere 30 min auf 90°C erwärmt. Anschließend wird die Masse im Speedmixer für 1 min bei 2750 U/min homogenisiert.

### Herstellung der Antidröhnmassen A3 und A4:

Zu dem Harz aus den Beispielen 4 bzw. 5 wird bei 90°C Joncryl^{®} ADR 4380 im Verhältnis 75:25 gegeben und in einem Speedmixer für 20 s bei 2750 U/min vermischt. Anschließend werden Glimmer (Muskovitglimmer GHL 144) und Kreide (Omyacarb^{®} 20BG) (im Verhältnis 1:2) zu dem Bindemittel (Harz plus Vernetzer) im Verhältnis 70:30 (Füllstoff-Bindemittel) gegeben und weitere 30 min auf 90°C erwärmt. Anschließend wird die Masse im Speedmixer für 1 min bei 2750 U/min homogenisiert.

### Herstellung der Antidröhnmasse A5:

Zu dem Harz aus Beispiel 2 werden bei 90°C eine Suspension des Acrylatpulvers Acronal^{®} S 629P in Hexamoll^{®} DINCH und Joncryl^{®} ADR 4380 (Harz:Acrylatpulver: Hexamoll:Joncryl = 1:1:1:1) gegeben und in einem Speedmixer für 20 s bei 2750 U/min vermischt. Anschließend werden Bariumsulfat und Kreide (Omyacarb^{®} 20BG) (zu gleichen Gewichtsanteilen) zu dem Bindemittel (Harz, Acrylatpulver, Hexamoll und Joncryl) im Verhältnis 85:15 (Füllstoff-Bindemittel) gegeben und weitere 30 min auf 90°C erwärmt. Anschließend wird die Masse im Speedmixer für 1 min bei 2750 U/min homogenisiert.

### Herstellung der Antidröhnmasse A6:

Die wässrige Dispersion aus Beispiel 6 wird bei Raumtemperatur im Verhältnis 70:30 (fest:fest) mit den Füllstoffen Glimmer (Muskovitglimmer GHL 144) und Kreide (Omyacarb^{®} 20BG) (im Verhältnis 1:2) mittels eines Dissolverrührers vermischt und anschließend im Speedmixer (beginnend mit 800 U/min für 10 s, danach innerhalb von 20 s auf 2500 U/min steigend, dieses 30 s haltend) homogenisiert.

### Herstellung der Antidröhnmasse A7:

Die wässrige Dispersion aus Beispiel 7 wird bei Raumtemperatur im Verhältnis 75:25 (festfest) mit den Füllstoffen Bariumsulfat und Kreide (Omyacarb^{®} 20BG) (im Verhältnis 1:1) sowie 4% Diethylenglycol und 2% Viskalex^{®} HV30 mittels eines Dissolverrührers vermischt und anschließend im Speedmixer (beginnend mit 800 U/min für 10 s, danach innerhalb von 20 s auf 2500 U/min steigend, dieses 30 s haltend) homogenisiert.

### Messung der Nullviskosität

Die Nullviskosität ist der Grenzwert der Viskositätsfunktion bei unendlich niedrigen Scherraten. Sie wird gemessen mit einem Anton Paar Rheometer MCR 100 (US 200 Auswertesoftware) in Platte/Platte Geometrie. Die Proben werden in oszillatorischer Scherung bei kleiner Scheramplitude von 10% vermessen. Temperatur 130°C (oder wie angegeben), Kreisfrequenzrampe log 100-0,1 1/s, Messspalt 0,5 mm, Auswertung nach Carreau-Gahleitner I, Stempeldurchmesser 25 mm.

### Beschreibung der Mischaggregate:

### Speedmixer:

Es kommt ein SpeedMixer DAC 400FVZ der Firma Hausschild zum Einsatz. Dieser ist ein Rotationsmischer, wodurch die Proben ohne Einmischung von Luft durchmischt werden. Die Rotationsgeschwindigkeit ist in einem Bereich von 800 bis 2750 1/min einstellbar.

### Dissolverrührer:

Die Apparatur besteht aus einem Rührwerk, einer damit angetriebenen Welle sowie einer Dissolverscheibe als Rührwerkzeug. Bei dieser Form der Durchmischung wird Luft mit in die Probe eingearbeitet. Die Rührgeschwindigkeit kann im Bereich von 0 - 1000 1/min eingestellt werden. Die Dissolverscheibe ist eine mit Zähnen an ihrem Umfang versehene Scheibe und dem Experten zur Dispergierung von z.B. Harzen in Wasser in der Farben- und Lackindustrie bekannt.

### Anwendungstechnische Prüfungen

### Bestimmung des Verlustfaktors

Zur Beurteilung des Schwingungsdämpfungsverhaltens wird der Verlustfaktor tan delta bei 25°C gemessen wie in WO 2007/034933 beschrieben (analog ISO 6721-1 und ISO 6721-3). Hierzu wird ein Prüfkörper aus Stahlblech einer Größe von 30 x 300 x 1,6 mm mit der zu testenden Antidröhnmasse beschichtet und 30 min bei 160°C getrocknet.

Die Beschichtungsmenge beträgt ca 3,0 kg pro m².

### Bestimmung der Wasseraufnahme:

Die Bestimmung der Wasseraufnahme wird in Anlehnung an die DIN EN ISO 62:2008 durchgeführt. Dazu werden von den erstellten Antidröhnmassen Filme einer Stärke von ca. 2 mm und einer Seitenlänge von je 25 mm hergestellt. Dazu werden die Filme erst 24 h bei Raumtemperatur (20 °C), danach 30 min bei 160°C getrocknet und jeweils 24 h bzw. 7 Tage in demineralisierten Wasser gelagert. Bestimmt wird die relative Massezunahme bei Lagerung. Diese wird gravimetrisch mittels einer Analysenwaage vom Typ AG204 der Firma Mettler Toledo ermittelt. Die Ergebnisse sind in Tabelle 1 aufgeführt.

### Ablauftest:

Der Ablauftest wird verwendet, um das Verhalten der Antidröhnmassen im Trockenschrank bei 160°C zu beurteilen. Dazu wird eine raupenförmige Probe (Stärke ca. 3 mm und 10 mm x 20 mm Kantenlänge) bei 90°C (Massen A1 bis A5) bzw. bei Raumtemperatur (Massen A6 und A7) auf ein Prüfblech aufgebracht. Dieses wird anschließend senkrecht in einen Trockenschrank bei 160°C platziert und das Ablaufen der Masse in Zentimetern bis zum jeweiligen Erhärten, maximal jedoch nach 60 min, ermittelt.

### Blasenbildung:

Die Antidröhnmasse der Stärke 3 mm und der Kantenlänge 60 mm x 100 mm wird nach 30 min Trocknung bei 160°C optisch beurteilt. Dabei findet folgende Notenskala Verwendung:
1: keine Blasen
2: 2-3 kleine Blasen
3: leichte Anhebung der Masse
4: große Blase, komplette Masse wölbt sich.

**Tabelle 1**

| Beispiel | tan delta max | Halbwertsbreite [°C] | T max [°C] | Wasseraufnahme [nach 24h/7d in%] | Ablauftest [cm/Zeit] | Blasen |
|---|---|---|---|---|---|---|
| A1 | | | | 1/3 | 9/3 min | 1 |
| A2 | | | | 1/3 | 9/3 min | 1 |
| A3 | 0,2 | 28 | 14 | 0,8/1,3 | 9/3 min | 1 |
| A4 ²⁾ | 0,18 | 26 | -12 | 1,5/2,2 | 9/3 min | 1 |
| A5 | | | | 2/4 | 0/60 min | 1 |
| A6 ¹⁾ | 0,18 | 28 | 14 | 20/24 | 0/60 min | 3 |
| A7 ¹⁾ | 0,18 | 26 | 22 | 17/18 | 0/60 min | 3 |
| ¹⁾ Vergleich ²⁾ nicht anspruchsgemäß | | | | | | |

Die Ergebnisse zeigen, dass eine besonders geringe Wasseraufnahme und eine besonders geringe Neigung zu Blasenbildung mit den Beispielen A1 bis A5 erreicht werden. Beispiel A5 zeichnet sich darüber hinaus durch ein besonders gutes Ablaufverhalten aus.

## Patentansprüche

1. Verwendung einer nicht-wässrigen Antidröhnmasse, enthaltend
(a) mindestens ein nicht-pulverförmiges, lösemittelfreies Polyacrylatbindemittel mit einem K-Wert im Bereich von 10 bis 35, gemessen als 1%ige Lösung in Tetrahydrofuran bei 21°C, wobei das Polyacrylatbindemittel durch Polymerisation von radikalisch polymerisierbaren Monomeren erhältlich ist und zu mindestens 60 Gew. % aus C₁ bis C₁₀ Alkyl(meth)acrylaten gebildet ist; und
(b) anorganische Füllstoffe,
zur Dämpfung von Vibrationen oder Schwingungen von Bauteilen von Fahrzeugen oder Maschinen;
wobei das Polyacrylatbindemittel eine Glasübergangstemperatur im Bereich von -30 °C bis kleiner oder gleich +60 °C aufweist, gemessen als Mittelpunktstemperatur durch Differential Scanning Calorimetrie gemäß ASTM 3418-08.

2. Verwendung einer Antidröhnmasse gemäß dem vorhergehenden Anspruch, **dadurch gekennzeichnet, dass** das Polyacrylatbindemittel aus weiteren Monomeren gebildet ist, ausgewählt aus ethylenisch ungesättigten, radikalisch polymerisierbaren Säuremonomeren, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

3. Verwendung einer Antidröhnmasse gemäß einem der vorhergehenden Ansprüche,
**dadurch gekennzeichnet, dass** das Polyacrylatbindemittel keine Kern-Schale Morphologie aufweist.

4. Verwendung einer Antidröhnmasse gemäß einem der vorhergehenden Ansprüche,
**dadurch gekennzeichnet, dass** das Polyacrylatbindemittel bei 130°C eine Nullviskosität von maximal 40 Pa s, vorzugsweise maximal 20 Pa s aufweist.

5. Verwendung einer Antidröhnmasse gemäß einem der vorhergehenden Ansprüche,
**dadurch gekennzeichnet, dass** das Polyacrylatbindemittel hergestellt ist
(a1) zu mindestens 80 Gew.% aus C1- bis C10-Alkyl(meth)acrylaten und
(a2) zu 0,5 bis 20 Gew.% aus Monomeren mit polaren Gruppen, wobei die polaren Gruppen ausgewählt sind aus Carbonsäuregruppen, Carbonsäureamidgruppen, Pyrroli-dongruppen, Urethangruppen und Harnstoffgruppen.

6. Verwendung einer Antidröhnmasse gemäß einem der vorhergehenden Ansprüche, **dadurch gekennzeichnet, dass** das Polyacrylatbindemittel hergestellt ist aus Methyl(meth)acrylat, mindestens einem C2- bis C4-Alkylacrylat und (Meth)acrylsäure.

7. Verwendung einer Antidröhnmasse gemäß einem der vorhergehenden Ansprüche,
**dadurch gekennzeichnet, dass** das Polyacrylatbindemittel hergestellt ist aus
(i) 0 bis 99 Gew.% Methyl(meth)acrylat,
(ii) 0 bis 99 Gew.% mindestens eines C2- bis C10-Alkylacrylats und
(iii)0,5 bis 15 Gew.% (Meth)acrylsäure.

8. Verwendung einer Antidröhnmasse gemäß einem der vorhergehenden Ansprüche, enthaltend
(a) 5 bis 35 Gew.% des Polyacrylatbindemittels,
(b) 40 bis 90 Gew.% anorganische Füllstoffe,
(c) 0 bis 50 Gew.% Hilfsstoffe.

9. Verwendung einer Antidröhnmasse gemäß einem der vorhergehenden Ansprüche,
**dadurch gekennzeichnet, dass** die anorganischen Füllstoffe ausgewählt sind aus Kaolin, Kreide, Bariumsulfat, Ruß, Graphit, Talkum, Tonmineralien, Mikrodolomit, Quarzmehl und Glimmer und die Hilfsstoffe zu mindestens 0,1 Gew.% eingesetzt werden und ausgewählt sind aus Vernetzern, Verdickungsmitteln, Rheologieadditiven, Harzen, Weichmachern, Cosolventien, Entschäumern, Konservierungsmitteln, Frostschutzmitteln und Pigmentdispergatoren.

10. Verwendung einer Antidröhnmasse gemäß einem der vorhergehenden Ansprüche,
**dadurch gekennzeichnet, dass** die Antidröhnmasse lösemittelfrei ist.

11. Verwendung einer Antidröhnmasse gemäß einem der vorhergehenden Ansprüche,
**dadurch gekennzeichnet, dass** zusätzlich ein pulverförmiges Bindemittel und optional ein Weichmacher für das pulverförmige Bindemittel enthalten ist.

12. Verwendung einer Antidröhnmasse gemäß einem der vorhergehenden Ansprüche,
**dadurch gekennzeichnet, dass** das Polyacrylatbindemittel Säuregruppen aufweist und die Antidröhnmasse mindestens einen mit Säuregruppen reaktiven Vernetzer enthält.

13. Verwendung einer Antidröhnmasse gemäß dem vorhergehenden Anspruch, **dadurch gekennzeichnet, dass** der Vernetzer ausgewählt ist aus der Gruppe bestehend aus Isocyanatvernetzern, Carbodiimidvernetzern, Epoxyvernetzern, Oxazolinvernetzern und Silanvernetzern, vorzugsweise polymeren oder oligomeren Epoxyvernetzern.

14. Verwendung einer Antidröhnmasse gemäß einem der vorhergehenden Ansprüche,
**dadurch gekennzeichnet, dass** das Polyacrylatbindemittel einen K-Wert von kleiner oder gleich 25 aufweist und die Antidröhnmasse mindestens einen Weichmacher enthält.

15. Verwendung einer Antidröhnmasse gemäß einem der vorherigen Ansprüche zur Schwingungsdämpfung von Karosserieteilen eines Fahrzeugs.

16. Verfahren zur Dämpfung von Vibrationen oder Schwingungen von Bauteilen von Fahrzeugen oder Maschinen, wobei
(1) eine Antidröhnmasse gemäß einem der Ansprüche 1 bis 14 zur Verfügung gestellt wird, und
(2) die Antidröhnmasse auf ein Bauteil eines Fahrzeuges oder einer Maschine aufgebracht und optional getrocknet und/oder vernetzt wird.

## Claims

1. The use of a nonaqueous sound deadener composition comprising
(a) at least one nonpulverulent, solvent-free polyacrylate binder having a K value in the range from 10 to 35, measured as a 1% strength solution in tetrahydrofuran at 21°C, wherein the polyacrylate binder is obtainable by polymerizing free-radically polymerizable monomers and is formed to an extent of at least 60% by weight of C₁ to C₁₀ alkyl (meth)acrylates; and
(b) inorganic fillers,
for damping oscillations or vibrations of components of vehicles or machines;
wherein the polyacrylate binder has a glass transition temperature in the range from -30°C to less than or equal to +60°C, measured as midpoint temperature by differential scanning calorimetry according to ASTM 3418-08.

2. The use of a sound deadener composition according to the preceding claim, wherein the polyacrylate binder is formed of further monomers selected from ethylenically unsaturated, free-radically polymerizable acid monomers, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

3. The use of a sound deadener composition according to either of the preceding claims, wherein the polyacrylate binder does not have a core-shell morphology.

4. The use of a sound deadener composition according to any of the preceding claims, wherein the polyacrylate binder at 130°C has a zero-shear viscosity of not more than 40 Pa s, preferably not more than 20 Pa s.

5. The use of a sound deadener composition according to any of the preceding claims, wherein the polyacrylate binder is prepared
(a1) to an extent of at least 80% by weight from C1 to C10 alkyl (meth)acrylates and
(a2) to an extent of 0.5% to 20% by weight from monomers having polar groups, the polar groups being selected from carboxylic acid groups, carboxamide groups, pyrrolidone groups, urethane groups, and urea groups.

6. The use of a sound deadener composition according to any of the preceding claims, wherein the polyacrylate binder is prepared from methyl (meth)acrylate, at least one C2 to C4 alkyl acrylate, and (meth)acrylic acid.

7. The use of a sound deadener composition according to any of the preceding claims, wherein the polyacrylate binder is prepared from
(i) 0% to 99% by weight of methyl (meth)acrylate,
(ii) 0% to 99% by weight of at least one C2 to C10 alkyl acrylate, and
(iii) 0.5% to 15% by weight of (meth)acrylic acid.

8. The use of a sound deadener composition according to any of the preceding claims, comprising
(a) 5% to 35% by weight of the polyacrylate binder,
(b) 40% to 90% by weight of inorganic fillers,
(c) 0% to 50% by weight of auxiliaries.

9. The use of a sound deadener composition according to any of the preceding claims, wherein the inorganic fillers are selected from kaolin, chalk, barium sulfate, carbon black, graphite, talc, clay minerals, microdolomite, finely ground quartz, and mica, and the auxiliaries are used to an extent of at least 0.1% by weight and are selected from crosslinkers, thickeners, rheological additives, resins, plasticizers, cosolvents, defoamers, preservatives, antifreeze agents, and pigment dispersants.

10. The use of a sound deadener composition according to any of the preceding claims, wherein the sound deadener composition is solvent-free.

11. The use of a sound deadener composition according to any of the preceding claims, further comprising a pulverulent binder and optionally a plasticizer for the pulverulent binder.

12. The use of a sound deadener composition according to any of the preceding claims, wherein the polyacrylate binder has acid groups and the sound deadener composition comprises at least one crosslinker which is reactive with acid groups.

13. The use of a sound deadener composition according to the preceding claim, wherein the crosslinker is selected from the group consisting of isocyanate crosslinkers, carbodiimide crosslinkers, epoxy crosslinkers, oxazoline crosslinkers, and silane crosslinkers, preferably polymeric or oligomeric epoxy crosslinkers.

14. The use of a sound deadener composition according to any of the preceding claims, wherein the polyacrylate binder has a K value of less than or equal to 25 and the sound deadener composition comprises at least one plasticizer.

15. The use of a sound deadener composition according to any of the preceding claims for vibration damping of bodywork parts of a vehicle.

16. A method for damping oscillations or vibrations of components of vehicles or machines, by
(1) providing a sound deadener composition according to any of claims 1 to 14, and
(2) applying the sound deadener composition to a component of a vehicle or of a machine, and subjecting it optionally to drying and/or to crosslinking.

## Revendications

1. Utilisation d'une composition d'insonorisation non aqueuse contenant
(a) au moins un liant polyacrylate, non pulvérulent et sans solvant, d'indice K compris entre 10 et 35, mesuré en solution à 1 % dans du tétrahydrofurane à 21 °C, le liant polyacrylate pouvant être obtenu par polymérisation de monomères polymérisables par voie radicalaire et étant formé à au moins 60 % en poids de (méth)acrylates d'alkyle en C₁ à C₁₀ ; et
(b) des charges minérales,
pour amortir des vibrations ou des oscillations de composants de véhicules ou de machines ;
le liant polyacrylate ayant une température de transition vitreuse dans la gamme allant de -30 °C à une valeur inférieure ou égale à +60 °C, mesurée comme température du point médian par calorimétrie différentielle à balayage selon la norme ASTM 3418-08.

2. Utilisation d'une composition d'insonorisation selon la revendication précédente, **caractérisée en ce que** le liant polyacrylate est formé à partir d'autres monomères, choisis parmi les monomères acides éthyléniquement insaturés et polymérisables par voie radicalaire, les esters vinyliques d'acides carboxyliques contenant jusqu'à 20 atomes de carbone, les composés aromatiques vinyliques comportant jusqu'à 20 atomes de carbone, les nitriles éthyléniquement insaturés, les halogénures vinyliques, les éthers vinyliques d'alcools contenant 1 à 10 atomes de carbone, les hydrocarbures aliphatiques contenant 2 à 8 atomes de carbone et une ou deux doubles liaisons ou des mélanges de ces monomères.

3. Utilisation d'une composition d'insonorisation selon l'une des revendications précédentes, **caractérisée en ce que** le liant polyacrylate ne présente pas de morphologie cœur-coque.

4. Utilisation d'un composé d'insonorisation selon l'une des revendications précédentes, **caractérisée en ce que** le liant polyacrylate présente une viscosité nulle d'un maximum de 40 Pa.s, de préférence d'un maximum de 20 Pa.s, à 130 °C.

5. Utilisation d'une composition d'insonorisation selon l'une des revendications précédentes, **caractérisée en ce que** le liant polyacrylate est produit
(a1) à au moins 80 % en poids à partir de (méth)acrylates d'alkyle en C₁ à C₁₀ et
(a2) de 0,5 à 20 % en poids à partir de monomères à groupes polaires, les groupes polaires étant choisis parmi les groupes acide carboxylique, les groupes carboxamide, les groupes pyrrolidone, les groupes uréthane et les groupes urée.

6. Utilisation d'une composition d'insonorisation selon l'une des revendications précédentes, **caractérisée en ce que** le liant polyacrylate est à base de (méth)acrylate de méthyle, d'au moins un acrylate d'alkyle en C₂ à C₄ et d'acide (méth)acrylique.

7. Utilisation d'une composition d'insonorisation selon l'une des revendications précédentes, **caractérisée en ce que** le liant polyacrylate est produit à partir de
(i) 0 à 99 % en poids de (méth)acrylate de méthyle,
(ii) 0 à 99 % en poids d'au moins un acrylate d'alkyle en C₂ à C₁₀ et
(iii) 0,5 à 15 % en poids d'acide (méth)acrylique.

8. Utilisation d'une composition d'insonorisation selon l'une des revendications précédentes, contenant
(a) 5 à 35 % en poids du liant polyacrylate,
(b) 40 à 90 % en poids de charges minérales,
(c) 0 à 50 % en poids de substances auxiliaires.

9. Utilisation d'une composition d'insonorisation selon l'une des revendications précédentes, **caractérisée en ce que** les charges minérales sont choisies parmi le kaolin, la craie, le sulfate de baryum, la suie, le graphite, le talc, les minéraux argileux, la microdolomite, la poudre de quartz et le mica et les substances auxiliaires sont utilisées à au moins 0,1 % en poids et sont choisies parmi les agents de réticulation, les épaississants, les additifs rhéologiques, les résines, les plastifiants, les cosolvants, les anti-mousses, les conservateurs, les antigels et les dispersants de pigments.

10. Utilisation d'une composition d'insonorisation selon l'une des revendications précédentes, **caractérisée en ce que** la composition d'insonorisation est exempte de solvant.

11. Utilisation d'une composition d'insonorisation selon l'une des revendications précédentes, **caractérisée en ce qu'**elle contient en outre un liant pulvérulent et éventuellement un plastifiant pour le liant pulvérulent.

12. Utilisation d'une composition d'insonorisation selon l'une des revendications précédentes, **caractérisée en ce que** le liant polyacrylate comporte des groupements acides et la composition d'insonorisation contient au moins un agent de réticulation réactif avec les groupements acides.

13. Utilisation d'une composition d'insonorisation selon la revendication précédente, **caractérisée en ce que** l'agent de réticulation est choisi dans le groupe comprenant les agents de réticulation isocyanate, les agents de réticulation carbodiimide, les agents de réticulation époxy, les agents de réticulation oxazoline et les agents de réticulation silane, de préférence les agents de réticulation époxy polymères ou oligomères.

14. Utilisation d'une composition d'insonorisation selon l'une des revendications précédentes, **caractérisée en ce que** le liant polyacrylate a une valeur K inférieure ou égale à 25 et la composition d'insonorisation contient au moins un plastifiant.

15. Utilisation d'une composition d'insonorisation selon l'une des revendications précédentes pour amortir des vibrations de pièces de carrosserie d'un véhicule.

16. Procédé d'amortissement de vibrations ou d'oscillations de composants de véhicules ou de machines,
(1) une composition d'insonorisation selon l'une des revendications 1 à 14 étant prévue, et
(2) la composition d'insonorisation étant appliquée sur un composant d'un véhicule ou d'une machine et éventuellement séchée et/ou réticulée.
